# EUROPÄISCHE PATENTANMELDUNG

(11) **EP 3 136 066 A1**
(43) Veröffentlichungstag der Anmeldung: **01.03.2017**
(21) Anmeldenummer: 16181148.4
(22) Anmeldetag: 26.07.2016
(51) Int. Cl.: G01J 5/40, G01J 5/44

(54) **VORRICHTUNG, ANORDNUNG UND VERFAHREN ZUM DETEKTIEREN VON INFRAROTSTRAHLUNG**

(30) Priorität: 28.08.2015 DE 102015216532
(71) Anmelder: ROBERT BOSCH GMBH, 70442 Stuttgart (DE)
(72) Erfinder: Utermoehlen, Fabian, 71229 Leonberg (DE); Henrici, Fabian, Palo Alto, 943041223 (US)

(57) **Zusammenfassung**

Die Erfindung schafft eine Vorrichtung, eine Anordnung von Vorrichtungen sowie ein Verfahren zum Detektieren von Infrarotstrahlung und ein entsprechendes Herstellungsverfahren. Die Vorrichtung ist ausgebildet mit: einem Substrat (12); einer ersten Elektrodeneinrichtung (14; 114; 214) auf oder an dem Substrat (12); einer an dem Substrat (12) über mindestens ein Aufhängungselement (4; 124, 126; 224, 226; 324, 326) elastisch aufgehängten Absorptionseinrichtung (16; 116; 216; 416), welche dazu ausgelegt ist, die zu detektierende Infrarotstrahlung (50) zu absorbieren; wobei das mindestens eine Aufhängungselement (4; 124, 126; 224, 226; 324, 326) dazu ausgebildet ist, sich in Abhängigkeit von der absorbierten Infrarotstrahlung (50) zu verformen; einer zweiten Elektrodeneinrichtung (18; 118; 418) auf oder an der Absorptionseinrichtung (16; 116; 216; 416); einer Steuereinrichtung (20), welche dazu ausgelegt ist, eine elektrische Potentialdifferenz zwischen der ersten Elektrodeneinrichtung (14; 114; 214) und der zweiten Elektrodeneinrichtung (18; 118; 418) derart zu erzeugen, dass die Absorptionseinrichtung (16; 116; 216; 416) in eine periodische Bewegung versetzt wird; einer Erfassungseinrichtung (22), welche dazu ausgelegt ist, eine Resonanzfrequenz der periodischen Bewegung zu erfassen; und einer Auswerteeinrichtung (24), welche dazu ausgelegt ist, die zu detektierende Infrarotstrahlung (50) basierend auf der erfassten Resonanzfrequenz zu detektieren.

## Beschreibung

Die vorliegende Erfindung betrifft eine Vorrichtung, eine Anordnung von Vorrichtungen sowie ein Verfahren zum Detektieren von Infrarotstrahlung und ein entsprechendes Herstellungsverfahren. Bei den Vorrichtungen handelt es sich insbesondere um mikromechanische Vorrichtungen. Unter einem Detektieren von Infrarotstrahlung ist insbesondere ein Feststellen einer einfallenden Infrarotstrahlung oder ein Bestimmen einer Leistung oder Energie einfallender Infrarotstrahlung zu verstehen.

### Stand der Technik

Elektromagnetische Strahlung, insbesondere Infrarotstrahlung, wird häufig nach dem bolometrischen Prinzip detektiert. Dieses Messprinzip basiert auf Absorption der elektromagnetischen Strahlung durch eine Absorptionseinrichtung und dadurch verursachter Erwärmung der Absorptionseinrichtung. Basierend auf der Erwärmung, beispielsweise durch Messen einer wärmeabhängigen Widerstandskennzahl, kann die absorbierte Strahlung ermittelt werden. Häufig werden in einer Anordnung, etwa einem sogenannten Array, einzelne Vorrichtungen zum Messen von elektromagnetischer Strahlung als sensierende "Pixelstrukturen" angeordnet, welche voneinander thermisch isoliert sind und jeweils ein temperatursensitives Element aufweisen.

Ein Bolometer ist beispielsweise in der US 2014 010 32110 A1 beschrieben.

Es besteht ein Bedarf nach besonders effizienten, mit geringem Aufwand herstellbaren und präzise messenden Vorrichtungen zum Detektieren von Infrarotstrahlung.

### Offenbarung der Erfindung

Die vorliegende Erfindung offenbart eine Vorrichtung mit den Merkmalen des Patentanspruchs 1, eine Anordnung mit den Merkmalen des Patentanspruchs 6, ein Verfahren mit den Merkmalen des Patentanspruchs 7 und ein Herstellungsverfahren mit den Merkmalen des Patentanspruchs 10.

Entsprechend wird eine Vorrichtung zum Detektieren von Infrarotstrahlung geschaffen, mit: einem Substrat; einer ersten Elektrodeneinrichtung, welche auf oder an dem Substrat angeordnet ist; einer Absorptionseinrichtung, welche dazu ausgelegt ist, die zu detektierende Infrarotstrahlung zumindest teilweise zu absorbieren; wobei die Absorptionseinrichtung über mindestens ein Aufhängungselement der Vorrichtung elastisch an dem Substrat aufgehängt ist; wobei das mindestens eine Aufhängungselement dazu ausgebildet ist, sich in Abhängigkeit von einer durch die absorbierte Infrarotstrahlung verursachten Wärme zumindest teilweise zu verformen; einer zweiten Elektrodeneinrichtung, welche auf oder an der Absorptionseinrichtung angeordnet ist; einer Steuereinrichtung, welche dazu ausgelegt ist, eine elektrische Potentialdifferenz zwischen der ersten Elektrodeneinrichtung und der zweiten Elektrodeneinrichtung derart zu erzeugen, dass die Absorptionseinrichtung in eine resonante periodische Bewegung versetzt wird; wobei eine Resonanzfrequenz der resonanten periodischen Bewegung von der Verformung des mindestens einen Aufhängungselements abhängt; einer Erfassungseinrichtung, welche dazu ausgelegt ist, die Resonanzfrequenz der Absorptionseinrichtung zu erfassen; und einer Auswerteeinrichtung, welche dazu ausgelegt ist, die zu detektierende Infrarotstrahlung basierend auf der erfassten Resonanzfrequenz der Absorptionseinrichtung zu detektieren.

Die thermische Verformung der Absorptionseinrichtung, das heißt, das Verformen der Absorptionseinrichtung in Abhängigkeit von Wärme, welche mit der absorbierten Infrarotstrahlung einhergeht, kann insbesondere eine Veränderung eines Elastizitätsmoduls eines Aufhängungselements der Absorptionseinrichtung bewirken, wodurch sich die Resonanzfrequenz der Absorptionseinrichtung verändert.

Weiterhin wird eine Anordnung einer Vielzahl von erfindungsgemäßen Vorrichtung zum Detektieren von Infrarotstrahlung geschaffen, insbesondere eine Anordnung mit einer n-spaltigen, m-reihigen Matrix aus erfindungsgemäßen Vorrichtungen, wobei n und m natürliche Zahlen sind.

Des Weiteren wird ein Verfahren zum Detektieren von Infrarotstrahlung geschaffen, mit den Verfahrensschritten: Leiten der zu detektierenden Infrarotstrahlung auf eine Absorptionseinrichtung, welche über mindestens ein Aufhängungselement an einem Substrat elastisch aufgehängt ist; wobei das mindestens eine Aufhängungselement dazu ausgebildet ist, sich in Abhängigkeit von einer durch die absorbierte Infrarotstrahlung verursachten Wärme zumindest teilweise zu verformen; Erzeugen einer elektrischen Potentialdifferenz zwischen einer ersten Elektrodeneinrichtung, welche auf oder an dem Substrat angeordnet ist, und einer zweiten Elektrodeneinrichtung, welche auf oder an der Absorptionseinrichtung angeordnet ist, derart, dass die Absorptionseinrichtung in eine resonante periodische Bewegung versetzt wird; wobei eine Resonanzfrequenz der resonanten periodischen Bewegung von der Verformung des Aufhängungselements abhängt; Erfassen der Resonanzfrequenz der Absorptionseinrichtung; und Detektieren der Infrarotstrahlung basierend auf der erfassten Resonanzfrequenz der Absorptionseinrichtung.

Weiterhin wird ein Verfahren zum Herstellen einer erfindungsgemäßen Vorrichtung zum Detektieren von Infrarotstrahlung geschaffen, mit den Schritten: Bereitstellen eines Substrats mit einer auf oder an dem Substrat angeordneten ersten Elektrodeneinrichtung; Abscheiden einer Opferschicht auf der ersten Elektrodeneinrichtung; Abscheiden und Strukturieren einer ersten metallischen Schicht auf der Opferschicht; Abscheiden einer ersten nichtleitenden Schicht auf der ersten metallischen Schicht; Abscheiden und Strukturieren einer zweiten metallischen Schicht auf der ersten nichtleitenden Schicht; Abscheiden einer zweiten nichtleitenden Schicht auf der ersten nichtleitenden Schicht; Abscheiden und Strukturieren einer dritten metallischen Schicht auf einem Bereich der zweiten nichtleitenden Schicht; Rückätzen der ersten und der zweiten nichtleitenden Schicht bis Ätzstopp auf Metall; Teilweises Entfernen der zweiten und der dritten metallischen Schicht; Ausbilden von Trenches bis auf die Opferschicht; Entfernen der Opferschicht; und Bereitstellen und Anschließen einer Steuereinrichtung, einer Erfassungseinrichtung und einer Auswerteeinrichtung.

### Vorteile der Erfindung

Die vorliegende Erfindung basiert auf der Erkenntnis, dass sich durch eine wärmebedingte Verformung eines elastischen Aufhängungselements für eine Absorptionseinrichtung eine Resonanzfrequenz der Absorptionseinrichtung bei einer resonanten periodischen Bewegung gegenüber einem Substrat verändert, und dass durch Bestimmung der veränderten Resonanzfrequenz eine Temperatur bestimmt werden kann.

Somit können Verfahren zum präzisen Messen von Frequenzen, insbesondere kapazitive Messverfahren, verwendet werden, wodurch sich eine Präzision der Detektion verbessert. Weiterhin kann ein Rauschen effektiv unterdrückt werden, beispielsweise durch einen Einsatz von Lock-in-Verstärkern. Die angeregte mechanische Resonanz ergibt zudem eine inhärente Verstärkung.

Bei der erfindungsgemäßen Vorrichtung kann, da diese dynamisch, d.h. während einer Bewegung, auswertbar ist, ein Ruheabstand zwischen der ersten und der zweiten Elektrodeneinrichtung größer sein als bei einer statischen Auswertung. Dadurch kann eine technisch aufwendige Herstellung mit einem besonders geringen Ruheabstand vermieden werden. Zudem erfordert die Herstellung der beiden Elektrodeneinrichtungen weniger komplexe Herstellungsprozesse, so dass die Vorrichtung mit besonders geringem technischem Aufwand herstellbar ist.

Die Vorrichtung ermöglicht zudem ein Messen ohne aktive elektrische Bauelemente wie z.B. Dioden, welche ein Eigenrauschen aufweisen. Auch kann die Vorrichtung besonders platzsparend in lateraler Richtung ausgebildet werden, so dass ein Füllfaktor einer Vielzahl von erfindungsgemäßen Vorrichtungen auf einem Wafer oder Substrat besonders hoch sein kann, insbesondere nahezu 100 % betragen kann.

Vorteilhafte Ausführungsformen und Weiterbildungen ergeben sich aus den Unteransprüchen sowie aus der Beschreibung unter Bezugnahme auf die Figuren.

Gemäß einer bevorzugten Weiterbildung der erfindungsgemäßen Vorrichtung weist das mindestens eine Aufhängungselement mindestens eine erste Bimetallstruktur auf, welche dazu ausgebildet ist, sich in Folge einer Erwärmung der Absorptionseinrichtung durch die absorbierte Infrarotstrahlung zu verformen. Somit ist auf technisch einfache Weise eine Beeinflussung der Resonanzfrequenz der Absorptionseinrichtung in Abhängigkeit von der zu detektierenden Infrarotstrahlung möglich.

Über das mindestens eine Aufhängungselement, insbesondere ausschließlich über dieses, ist die Absorptionseinrichtung mit dem Substrat verbunden. Das Aufhängungselement kann eine erhöhte Beweglichkeit der Absorptionseinrichtung gegenüber dem Substrat ermöglichen und zur thermischen Isolierung der Absorptionseinrichtung von dem Substrat und/oder weiteren Absorptionseinrichtungen dienen. Die mindestens eine erste Bimetallstruktur kann an oder auf einer Federstruktur des mindestens einen Aufhängungselement angeordnet sein oder ein Teil der Federstruktur sein. Die Federstruktur kann beispielsweise eine Vielzahl von miteinander verbundenen Stegen aufweisen. Somit kann die mindestens eine erste Bimetallstruktur auf einem besonders leicht und/oder stark verformbaren Teil der Absorptionseinrichtung ausgebildet sein und daher besonders sensibel auf die absorbierte Infrarotstrahlung reagieren. Zudem kann eine Metallschicht der Bimetallstruktur in vorteilhafter Weise während eines Herstellungsverfahrens der erfindungsgemäßen Vorrichtung als eine Ätz-Stopp-Schicht fungieren, insbesondere bei der Herstellung des Aufhängungselements.

Soll ein erstes Element "auf" einem zweiten Elements ausgebildet werden, so soll darunter sowohl verstanden werden, dass es unmittelbar an dem zweiten Element ausgebildet wird, als auch, dass es mittelbar über diesem Element ausgebildet wird. Soll das erste Element "an" dem zweiten Element ausgebildet werden, ist darunter zu verstehen, dass es unmittelbar an dem zweiten Element ausgebildet wird.

Unter einer Bimetallstruktur soll eine mechanische, insbesondere mikromechanische, Struktur verstanden werden, welche nach dem Bimetallprinzip funktioniert, welche aber nicht notwendigerweise zwei Metallschichten aufweist. Beispielsweise kann eine erste Schicht der Bimetallstruktur eine metallische Schicht und eine zweite Schicht der Bimetallstruktur eine nicht-metallische, insbesondere nicht-leitende, Schicht sein. Gemäß dem Bimetallprinzip sind zwei Schichten unterschiedlicher Wärmeausdehnungskoeffizienten miteinander stoffschlüssig oder formschlüssig verbunden, wodurch sich bei Erwärmung der Bimetallstruktur als Ganze eine Verbiegung, das heißt eine Verformung, der Bimetallstruktur ergibt.

Gemäß einer weiteren bevorzugten Weiterbildung weist das mindestens eine Aufhängungselement eine zweite Bimetallstruktur auf oder besteht daraus. Die zweite Bimetallstruktur ist bevorzugt von dem Verformungselement thermisch entkoppelt, etwa über ein Entkopplungselement. Die zweite Bimetallstruktur kann mit einer gleichen Länge und aus denselben Materialien ausgebildet sein wie die erste Bimetallstruktur und kann auch in anderen Dimensionen vorteilhaft der ersten Bimetallstruktur gleichen. Die zweite Bimetallstruktur kann dazu dienen, eine stets vorhandene Biegung, das heißt Verformung, der ersten Bimetallstruktur auszugleichen, welche beispielsweise aufgrund des Herstellungsverfahrens auftreten kann.

Beispielsweise kann es sein, dass die erste Bimetallstruktur als ein Stapel von mindestens zwei Schichten mit verschiedenen Wärmeausdehnungskoeffizienten bei einer Abscheidungstemperatur einer der Schichten spannungsfrei ist, bei anderen Temperaturen, beispielsweise bei Raumtemperatur, aber einen Eigenstress oder eine Vorspannung, das heißt eine dauerhaft vorliegende Biegung oder Verformung aufweist. Die zweite Bimetallstruktur kann dazu ausgebildet und angeordnet sein, um die erste und die zweite Elektrodeneinrichtung der erfindungsgemäßen Vorrichtung in ein vorbestimmtes Lageverhältnis zueinander zu bringen, insbesondere um die erste und die zweite Elektrodeneinrichtung in Ruhelage parallel zueinander anzuordnen. Durch die thermische Entkopplung zwischen der ersten Bimetallstruktur und der zweiten Bimetallstruktur wird sichergestellt, dass eine aufgrund der absorbierten Infrarotstrahlung erhöhte Temperatur auf die erste Bimetallstruktur, aber nicht auf die zweite Bimetallstruktur übertragen wird. Dazu kann vorgesehen sein, dass die Absorptionseinrichtung, insbesondere ein Infrarotstrahlungs-Absorptionselement der Absorptionseinrichtung, näher an der ersten Bimetallstruktur als an der zweiten Bimetallstruktur angeordnet ist. Weiterhin kann vorgesehen sein, dass die erste Bimetallstruktur zwischen der Absorptionseinrichtung und der zweiten Bimetallstruktur angeordnet ist.

Gemäß einer weiteren bevorzugten Weiterbildung sind die erste Elektrodeneinrichtung und die zweite Elektrodeneinrichtung in einem Abstand zueinander angeordnet, welcher zwischen einem Achtel und drei Achteln einer Wellenlänge der zu detektierenden Strahlung liegt und welcher bevorzugt in einem Bereich von plus und minus 10 % um ein Viertel der Wellenlänge der zu detektierenden Infrarotstrahlung liegt. Die Wellenlänge der zu detektierenden Infrarotstrahlung kann beispielsweise 10 Mikrometer betragen. Somit kann eine Absorption der zu detektierenden Infrarotstrahlung verbessert werden. Alternativ oder gleichzeitig können die erste und die zweite Elektrodeneinrichtung mit einem besonders geringen Abstand voneinander ausgebildet werden, beispielsweise durch Atomlagenabscheidung (Englisch: atomic layer deposition, ALD) einer 100 Nanometer dicken Opferschicht, welche in einem späteren Arbeitsschritt wieder entfernt wird. Dadurch kann eine möglichst große elektrische Kapazität zwischen der ersten und der zweiten Elektrodeneinrichtung ausgebildet werden, wodurch eine kapazitive Messung der Resonanzfrequenz der Absorptionseinrichtung verbessert werden kann.

Gemäß einer weiteren bevorzugten Weiterbildung weist die erste Elektrodeneinrichtung mindestens eine Antriebselektrode und mindestens eine Detektionselektrode auf, welche voneinander beabstandet sind. Die Steuereinrichtung ist dazu ausgelegt, eine elektrische Potentialdifferenz zwischen der mindestens einen Antriebselektrode der ersten Elektrodeneinrichtung und der zweiten Elektrodeneinrichtung zu erzeugen. Dazu können die erste und/oder die zweite Elektrodeneinrichtung elektrisch mit der Steuereinrichtung verbunden sein. Die erste oder die zweite Elektrodeneinrichtung kann auch auf Masse gelegt sein. Die Erfassungseinrichtung kann zum Erfassen der resonanten periodischen Bewegung der Absorptionseinrichtung elektrisch mit der mindestens einen Detektionselektrode gekoppelt, das heißt galvanisch verbunden, sein.

Alternativ kann auch ein- und dieselbe Elektrode, oder eine Vielzahl von Elektroden der ersten Elektrodeneinrichtung, jeweils sowohl als Antriebselektrode(n) und als Detektionselektrode(n) fungieren. Somit kann je nach der vorliegenden Geometrie der erfindungsgemäßen Vorrichtung und der gewünschten Präzision und Akkuratheit der Detektion eine geeignete Konfiguration der ersten Elektrodeneinrichtung gewählt werden.

Gemäß einer bevorzugten Weiterbildung des erfindungsgemäßen Verfahrens zum Detektieren von Infrarotstrahlung wird zum Erfassen der Resonanzfrequenz der Absorptionseinrichtung eine elektrische Kapazität, insbesondere als Funktion der Zeit, zwischen zumindest einem Teil der ersten Elektrodeneinrichtung, insbesondere einer Detektionselektrode, und zumindest einem Teil der zweiten Elektrodeneinrichtung erfasst. Somit kann die Resonanzfrequenz besonders präzise erfasst werden. Bevorzugt erfolgt das Erfassen der Resonanzfrequenz unter Verwendung eines Lock-In-Verstärkers. Dadurch ist die Resonanzfrequenz besonders präzise erfassbar.

### Kurze Beschreibung der Zeichnungen

Die vorliegende Erfindung wird nachfolgend anhand der in den schematischen Figuren der Zeichnungen dargestellten Ausführungsbeispiele näher erläutert. Es zeigen:
- Fig. 1: ein schematisches Blockschaltbild einer Vorrichtung zum Detektieren von Infrarotstrahlung gemäß einer Ausführungsform der vorliegenden Erfindung;
- Fig. 2: eine schematische Seitenansicht einer Vorrichtung zum Detektieren von Infrarotstrahlung gemäß einer weiteren Ausführungsform der vorliegenden Erfindung;
- Fig. 3: eine schematische Draufsicht auf die Absorptionseinrichtung und die Aufhängungselemente aus Fig. 2 in Richtung des Substrats;
- Fig. 4: eine schematische Seitenansicht einer Vorrichtung gemäß noch einer weiteren Ausführungsform der vorliegenden Erfindung;
- Fig. 5: eine schematische schräge Detailansicht auf eine Vorrichtung zum Detektieren von Infrarotstrahlung gemäß noch einer weiteren Ausführungsform der vorliegenden Erfindung;
- Fig. 6: eine schematische schräge Detailansicht auf eine Vorrichtung zum Detektieren von Infrarotstrahlung gemäß noch einer weiteren Ausführungsform der vorliegenden Erfindung;
- Fig. 7: eine schematische Draufsicht auf eine Anordnung von erfindungsgemäßen Vorrichtungen gemäß noch einer weiteren Ausführungsform der vorliegenden Erfindung;
- Fig. 8: ein schematisches Flussdiagramm eines Verfahrens zum Detektieren von Infrarotstrahlung gemäß einer weiteren Ausführungsform der vorliegenden Erfindung;
- Fig. 9: ein schematisches Blockschaltbild zum Erläutern eines möglichen Auswerteprinzips in dem Verfahren gemäß Fig. 8; und
- Fig. 10: ein schematisches Blockdiagramm zum Erläutern eines Verfahrens zum Herstellen einer Vorrichtung zum Detektieren von Infrarotstrahlung.

In allen Figuren sind gleiche bzw. funktionsgleiche Elemente und Vorrichtungen - sofern nichts anderes angegeben ist - mit denselben Bezugszeichen versehen. Die Nummerierung von Verfahrensschritten dient der Übersichtlichkeit und soll insbesondere nicht, sofern nichts anderes angegeben ist, eine bestimmte zeitliche Reihenfolge implizieren. Insbesondere können auch mehrere Verfahrensschritte gleichzeitig durchgeführt werden.

### Beschreibung der Ausführungsbeispiele

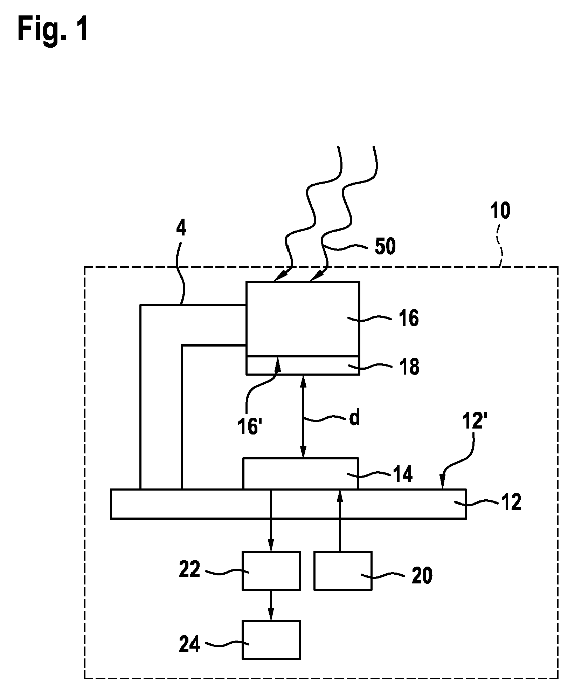

Fig. 1 zeigt ein schematisches Blockschaltbild einer Vorrichtung 10 zum Detektieren von Infrarotstrahlung 50 gemäß einer Ausführungsform der vorliegenden Erfindung. Die Vorrichtung 10 umfasst ein Substrat 12, welches beispielsweise aus Silizium oder Siliziumoxid (SiO₂) besteht oder diese Stoffe aufweist. Das Substrat 12 kann auch eine anwendungsspezifische integrierte Schaltung (Englisch: application-specific integrated circuit, ASIC) sein oder umfassen. An einer Außenseite 12' des Substrats 12 ist eine erste Elektrodeneinrichtung 14 angeordnet, welche mindestens eine Elektrode umfasst. Die Elektroden sind insbesondere Metallelektroden, beispielsweise aus Aluminium. Beabstandet von der ersten Elektrodeneinrichtung ist, über der Außenseite 12' des Substrats 12, eine Absorptionseinrichtung 16 an dem Substrat 12 derart aufgehängt, dass sie relativ zu dem Substrat 12 bewegbar ist. An einer dem Substrat 12 zugewandten Außenseite 16' der Absorptionseinrichtung 16 ist eine zweite Elektrodeneinrichtung 18 ausgebildet, welche mindestens eine Elektrode umfasst.

Die Absorptionseinrichtung 16 ist über mindestens ein Aufhängungselement 4 der Vorrichtung 10 derart an dem Substrat 12 elastisch aufgehängt, dass sich durch Bewegen der bewegbaren Absorptionseinrichtung 16 ein Abstand d zwischen der ersten und der zweiten Elektrodeneinrichtung 14, 18 erhöhen oder verringern kann, bevorzugt ohne dass der Abstand auf null verringert werden kann. Die erste und die zweite Elektrodeneinrichtung 14, 18 sind vorzugsweise parallel zueinander und vorzugsweise übereinander angeordnet, d.h., dass eine Projektion der ersten Elektrodeneinrichtung 14 auf die Außenseite 12' des Substrats 12 eine Projektion der zweiten Elektrodeneinrichtung 18 auf die Außenseite 12' möglichst viel überlappt.

Die Absorptionseinrichtung 16 ist dazu ausgelegt, die zu detektierende Infrarotstrahlung 50 zumindest teilweise zu absorbieren, beispielsweise mittels eines Infrarotstrahlungs-Absorptionselements, welches ein Material wie z.B. SiO₂ aufweist oder daraus besteht, welches die zu detektierende Infrarotstrahlung 50 absorbiert, bevorzugt zu einem hohen Prozentsatz.

Die Vorrichtung 10 umfasst außerdem eine Steuereinrichtung 20, welche dazu ausgelegt ist, eine elektrische Potentialdifferenz zwischen der ersten Elektrodeneinrichtung 14 und der zweiten Elektrodeneinrichtung 18 derart zu erzeugen, dass die Absorptionseinrichtung 16 in eine resonante periodische Bewegung versetzt wird. Dazu kann beispielsweise eine Wechselspannung an eine oder beide der ersten und zweiten Elektrodeneinrichtung 14, 18 durch die Steuereinrichtung 20 angelegt werden. Alternativ kann beispielsweise auch nur eine Wechselspannung an die erste Elektrodeneinrichtung 14 und/oder nur an die zweite Elektrodeneinrichtung 18 angelegt werden. Die zweite Elektrodeneinrichtung 18 kann über eine niederohmige Metallverbindung mit dem Substrat 12 und/oder der Steuereinrichtung 20 elektrisch verbunden sein.

Die Vorrichtung 10 umfasst weiterhin eine Erfassungseinrichtung 22, welche dazu ausgelegt ist, die periodische Bewegung, in welche die Absorptionseinrichtung 16 mittels der Steuereinrichtung 20 versetzt wurde, zu erfassen. Eine Auswerteeinrichtung 24 der Vorrichtung 10 ist dazu ausgelegt, die zu detektierende Infrarotstrahlung 50 basierend auf der erfassten periodischen Bewegung der Absorptionseinrichtung 16 zu detektieren.

Das mindestens eine Aufhängungselement 4 ist dazu ausgebildet, sich zumindest teilweise in Abhängigkeit von der absorbierten Infrarotstrahlung 50, insbesondere aufgrund einer durch die absorbierte Infrarotstrahlung 50 in der Absorptionseinrichtung verursachten, an das Aufhängungselement 4 geleiteten Wärme zu verformen. Durch die Verformung ändert sich eine Resonanzfrequenz der Absorptionseinrichtung 16 bei ihrer resonanten periodischen Bewegung gegenüber dem Substrat 12. Basierend auf Vergleichsdaten oder einem Rechenmodell in der Auswerteeinrichtung 24 kann aus der veränderten Resonanzfrequenz der Absorptionseinrichtung 16 die zu detektierende Infrarotstrahlung 50 rekonstruiert werden, wodurch insgesamt die Infrarotstrahlung 50 detektiert wird.

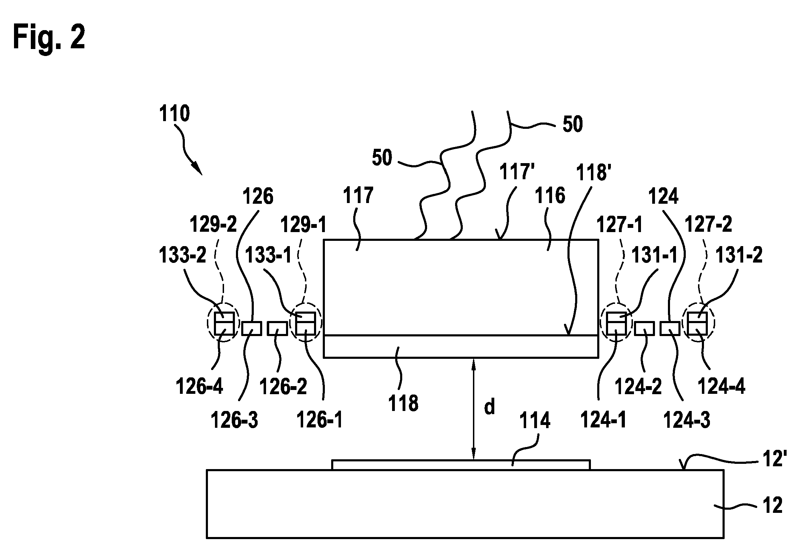

Fig. 2 zeigt eine schematische Seitenansicht einer Vorrichtung 110 zum Detektieren von Infrarotstrahlung 50 gemäß einer weiteren Ausführungsform der vorliegenden Erfindung.

Bei der Vorrichtung 110 handelt es sich um eine Variante der Vorrichtung 10. Die Steuereinrichtung 20, die Erfassungseinrichtung 22 und die Auswerteeinrichtung 24 sind in Fig. 2 nicht explizit dargestellt. Ebenso wenig sind die elektrischen Verbindungen zu diesen Einrichtungen 20, 22, 24 dargestellt. Beispielsweise kann die erste Elektrodeneinrichtung 114 der Vorrichtung 110 eine oberste Metallisierung eines in dem Substrat 12 integrierten Halbleiterbauelements, beispielsweise eines ASICs, z.B. eines CMOS-ASICs sein. Der ASIC kann beispielsweise die Einrichtungen 20, 22 und/oder 24 realisieren. Gemäß Fig. 2 ist die erste Elektrodeneinrichtung 114 als eine einzelne, flächige, metallische Elektrode ausgebildet. Diese Elektrode dient sowohl als Antriebselektrode, d.h. zum Erzeugen der resonanten periodischen Bewegung einer Absorptionseinrichtung 116 der Vorrichtung 110, als auch als Detektionselektrode, d.h. zum Erfassen der Resonanzfrequenz.

Im Ruhezustand, das heißt ohne einfallende Infrarotstrahlung 50, ist im Abstand d von der ersten Elektrodeneinrichtung 114 eine zweite Elektrodeneinrichtung 118 der Vorrichtung 110 angeordnet. An einer von dem Substrat 12 abgewandten Außenseite 118' der zweiten Elektrodeneinrichtung 118 ist die zweite Elektrodeneinrichtung 118 mit einem Infrarotstrahlungs-Absorptionselement 117, z.B. unmittelbar, verbunden. Das Infrarotstrahlungs-Absorptionselement 117 weist eine Oberfläche 117' auf, welche von der zweiten Elektrodeneinrichtung 118 abgewandt ist und welche dazu ausgelegt ist, dass die zu detektierende Infrarotstrahlung 50 über diese Oberfläche 117' in das Infrarotstrahlungs-Absorptionselement 117 eintritt. Das Infrarotstrahlungs-Absorptionselement 117 kann beispielsweise aus einer Siliziumoxid-Schicht (SiO₂-Schicht) mit einer Dicke im Bereich von, oder von genau, 1,6 Mikrometern bestehen. Die Absorptionseinrichtung 116 kann weitere an die Wellenlänge der zu detektierenden Infrarotstrahlung 50 angepasste Infrarotstrukturen und/oder plasmonische Elemente aufweisen.

Das Infrarotstrahlungs-Absorptionselement 117 und die zweite Elektrodeneinrichtung 118 gehören zu der Absorptionseinrichtung 116 der Vorrichtung 110, welche bewegbar über dem Substrat 12 derart aufgehängt ist, dass der Abstand d veränderbar ist. Durch Anlegen eines elektrischen Potentials an zumindest die erste Elektrodeneinrichtung 114 kann die resonante periodische Bewegung der Absorptionseinrichtung 116 gegenüber dem Substrat 12 angeregt werden.

Die Absorptionseinrichtung 116 ist über zwei Aufhängungselemente 124, 126 elastisch an dem Substrat 12 aufgehängt, welche lateral an dem Infrarotstrahlungs-Absorptionselement 117 und/oder der zweiten Elektrodeneinrichtung 118 angeordnet sind, insbesondere, bezogen auf das Infrarotstrahlungs-Absorptionselement 117, gegenüberliegend. Unter einer lateralen Richtung ist eine Richtung parallel zu der Außenseite 12' des Substrats 12 zu verstehen. Die Aufhängungselemente 124, 126 weisen eine Vielzahl von parallel angeordneten Stegen 124-1, 124-2, 124-3, 124-4, 126-1, 126-2, 126-3, 126-4 auf, welche meanderförmig, schlangenförmig oder zickzackförmig, insbesondere abzweigungsfrei, miteinander verbunden sind. Die Stege 124-1, 124-2, 124-3, 124-4 werden zusammenfassend als 124-i bezeichnet und die Stege 126-1, 126-2, 126-3, 126-4 werden zusammenfassend als 126-i bezeichnet.

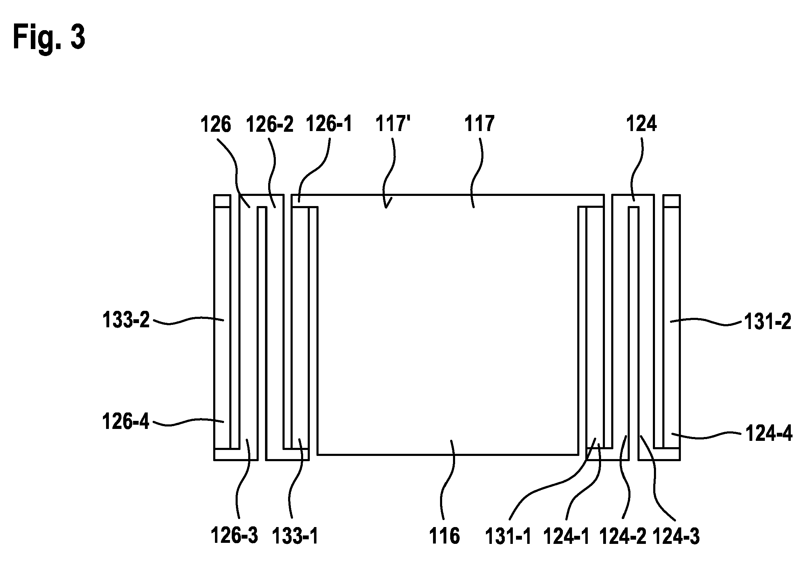

Fig. 3 zeigt eine schematische Draufsicht auf die Absorptionseinrichtung 116 und die Aufhängungselemente 124, 126 in Richtung des Substrats 12.

Die Stege 124-i, 126-i sind beispielsweise aus demselben Material wie das Infrarotstrahlungs-Absorptionselement 117 und/oder das Substrat 12 ausgebildet. Die Stege 124-i und 126-i sind in Fig. 2 als jeweils vier Stege dargestellt. Es können aber auch insgesamt nur zwei oder drei, oder fünf oder mehr Stege vorgesehen sein.

Auf den jeweils am Nächsten an dem Infrarotstrahlungs-Absorptionselement 117 angeordneten Steg 124-1, 126-1 der Aufhängungselemente 124, 126 ist jeweils ein erster Metallabschnitt 131-1, 133-1, in Draufsicht deckungsgleich mit dem jeweiligen Steg 124-1, 126-1, ausgebildet, beispielsweise aus Kupfer, Gold oder Titan. Der jeweilige erste Metallabschnitt 131-1,133-1 bildet zusammen mit dem jeweiligen Steg 124-1, 126-1 eine jeweilige erste Bimetallstruktur 127-1, 129-1, da sich die Wärmeausdehnungskoeffizienten des Materials der Stege 124-1, 126-1 und der ersten Metallabschnitte 131-1, 133-1 voneinander unterscheiden. Bei Erwärmung der Absorptionseinrichtung 116, insbesondere des Infrarotstrahlungs-Absorptionselements 117, mit welchem die Stege 124-1, 126-1 bevorzugt unmittelbar verbunden sind, verändert sich eine Biegung der beiden ersten Bimetallstrukturen 127-1, 129-1, wodurch sich die Resonanzfrequenz der Absorptionseinrichtung 116 bei ihrer Bewegung gegenüber dem Substrat 12 verändert.

An jedem Aufhängungselement 124, 126 ist außerdem eine zweite Bimetallstruktur 127-2, 129-2 ausgebildet. Die zweiten Bimetallstrukturen 127-2, 129-2 sind ausgebildet, indem jeweils ein zweiter Metallabschnitt 131-2, 133-2 auf den jeweils am Weitesten von dem Infrarotstrahlungs-Absorptionselement 117 angeordneten Steg 124-4, 126-4 angeordnet ist, wie in Bezug auf die ersten Metallabschnitte 131-1, 133-1 und die Stege 124-1, 126-1 beschrieben. Bevorzugt sind die ersten und die zweiten Bimetallstrukturen 127-1, 129-1, 127-2, 129-2 jeweils identisch ausgebildet, das heißt mit den gleichen Dimensionen und aus den gleichen Materialien. Die zweiten Bimetallstrukturen 127-2, 129-2 können somit als Kompensationselemente dienen, welche eine beispielsweise bei dem Herstellungsprozess der Vorrichtung 110 vorliegende Vorspannung der ersten Bimetallstrukturen 127-1, 129-1 kompensieren, insbesondere um die erste und die zweite Elektrodeneinrichtung 114, 118 in Ruhelage möglichst parallel zueinander anzuordnen.

Bevorzugt sind die ersten Bimetallstrukturen 127-1, 129-1 von den zweiten Bimetallstrukturen 127-2, 129-2 mittels eines Entkopplungselements thermisch entkoppelt, so dass das Verformen der ersten Bimetallstrukturen 127-1, 129-1, das heißt das entsprechende Verbiegen nach dem Absorbieren der Infrarotstrahlung 50 durch das Infrarotstrahlungs-Absorptionselement 117 und dem folgenden Wärmetransport, durch die zweiten Bimetallstrukturen 127-2, 129-2 nicht kompensiert wird. Dazu ist vorteilhaft mindestens ein Steg 124-2, 124-3, 126-2, 126-3 zwischen jeweils einer ersten Bimetallstruktur 127-1, 129-1 und einer zweiten Bimetallstruktur 127-2, 129-2 angeordnet, besonders bevorzugt zwei oder mehr Stege.

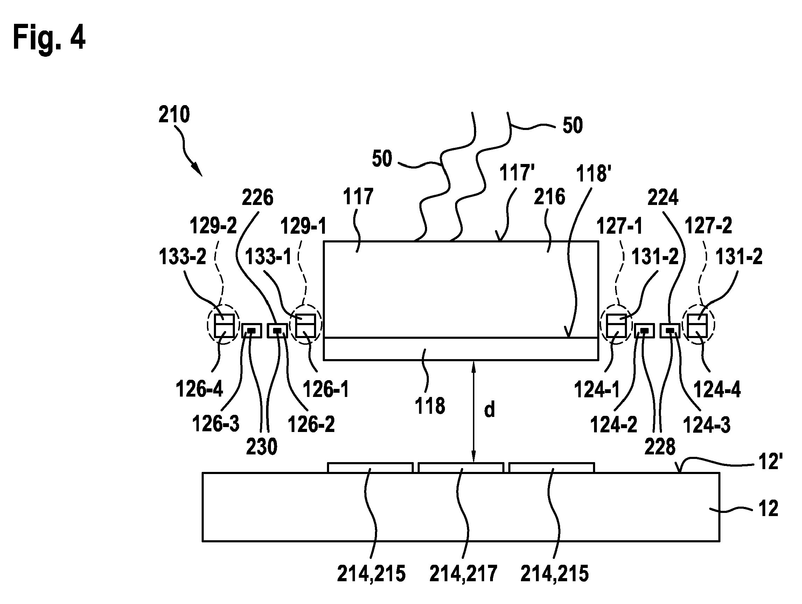

Fig. 4 zeigt eine schematische Seitenansicht einer Vorrichtung 210 gemäß noch einer weiteren Ausführungsform der vorliegenden Erfindung.

Die Vorrichtung 210 ist eine Variante der Vorrichtung 110 und unterscheidet sich von dieser vornehmlich in der Ausbildung der Absorptionseinrichtung 216 der Vorrichtung 210, insbesondere der Aufhängungselemente 224, 226 der Vorrichtung 210, sowie der ersten Elektrodeneinrichtung 214 der Vorrichtung 210.

Die erste Elektrodeneinrichtung 214 umfasst zwei Antriebselektroden 215 und eine zwischen den beiden Antriebselektroden 215 angeordnete Detektionselektrode 217, wobei die Antriebselektroden 215 und die Detektionselektrode 217 jeweils voneinander galvanisch getrennt und beabstandet sind. Die Antriebselektroden 215 sind elektrisch mit der (nicht dargestellten) Steuereinrichtung 20 gekoppelt und sind mittels der Steuereinrichtung 20 mit einem zeitlich variablen elektrischen Potential beaufschlagbar, wodurch die Absorptionseinrichtung 216 in die periodische Bewegung versetzbar ist.

In der Vorrichtung 210 ist zudem die zweite Elektrodeneinrichtung 118 über elektrische Leitungen 228, 230 mit der Steuereinrichtung 20 elektrisch gekoppelt, so dass auch die zweite Elektrodeneinrichtung 118 mit einem elektrischen Potential, beispielsweise einem zeitlich variablen elektrischen Potential, beaufschlagbar ist, insbesondere mit einem anderen elektrischen Potential als es aktuell die Antriebselektroden 215 aufweisen.

Die Detektionselektrode 217 ist insbesondere, bezogen auf eine Projektion der zweiten Elektrodeneinrichtung 118 auf die Außenfläche 12' des Substrats 12, zentriert angeordnet, wodurch sich eine Präzision und/oder Akurratheit der Erfassung der Resonanzfrequenz der Absorptionseinrichtung 116 erhöht. Die Antriebselektroden 215, welche optional auch mehr oder weniger als zwei sein können, sind vorzugsweise symmetrisch um die Detektionselektrode 217 angeordnet, um eine möglichst effiziente Anregung der periodischen Bewegung der Absorptionseinrichtung 116 zu ermöglichen. Es ist auch der umgekehrte Fall denkbar, wonach 217 die Antriebselektrode und 214 die Detektionselektrode darstellt.

Gemäß Fig. 4 verlaufen die elektrischen Leitungen 228, 230 zwischen der zweiten Elektrodeneinrichtung 118 und der Steuereinrichtung 20 teilweise innerhalb der Aufhängungselemente 224, 226, welche ansonsten gleich den Aufhängungselementen 124, 126 der Vorrichtung 110 ausgebildet sein können. Alternativ oder zusätzlich können auch die ersten und zweiten metallischen Abschnitte 131-1, 133-1, 131-2, 133-2 als Teile der elektrischen Leitungen 228, 230 verwendet werden. Dazu können beispielsweise innerhalb der Stege 124-2, 124-3, 126-2, 126-3 elektrische Leiterbahnen im Inneren der Stege 124-i, 126-i angeordnet sein, welche über vertikale Durchkontaktierungen mit den metallischen Abschnitten 131-1, 131-2, 133-1, 133-2 verbunden sind.

Über die elektrischen Leitungen 228, 230 kann beispielsweise durch Anlegen eines vordefinierten elektrischen Potentials durch die Steuereinrichtung 20 eine Vorspannung zwischen der Absorptionseinrichtung 216 und dem Substrat 12 eingestellt werden, beispielsweise um den Abstand d zwischen der ersten und der zweiten Elektrodeneinrichtung 214, 118 zu verringern und somit eine Messgenauigkeit zu verbessern.

Alternativ oder zusätzlich kann die zweite Elektrodeneinrichtung 118 auch mit der Erfassungseinrichtung 22 elektrisch verbunden sein, so dass die Erfassungseinrichtung 22 eine direkte Kapazitätsmessung zwischen der ersten Elektrodeneinrichtung 118 und der Detektionselektrode 217 durchführen kann, um die Resonanzfrequenz der Absorptionseinrichtung 116 anhand einer periodischen Kapazitätsänderung zu erfassen. Dadurch kann sich eine Präzision der Erfassung der Resonanzfrequenz verbessern.

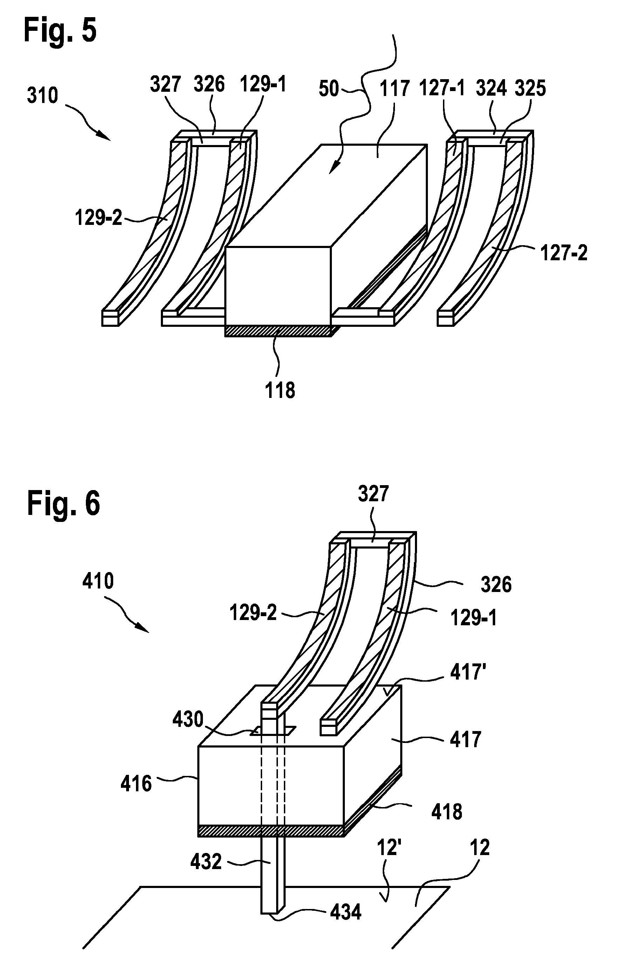

Fig. 5 zeigt eine schematische schräge Detailansicht auf eine Vorrichtung 310 zum Detektieren von Infrarotstrahlung 50 gemäß noch einer weiteren Ausführungsform der vorliegenden Erfindung. Die Vorrichtung 310 ist eine Variante der Vorrichtungen 110 oder 210 und unterscheidet sich von diesen in der Ausgestaltung der beiden Aufhängungselemente 324, 326 der Vorrichtung 310. Jedes Aufhängungselement 324, 326 weist, wie die Aufhängungselemente 124, 126; 224, 226, jeweils eine erste Bimetallstruktur 127-1, 129-1 und eine zweite Bimetallstruktur 127-2, 129-2 auf, zwischen welchen bei der Vorrichtung 310 jedoch keine weiteren parallelen Stege 124-i, 126-i als thermisches Entkopplungselement angeordnet sind, sondern jeweils nur ein Quersteg 325, 327 als thermisches Entkopplungselement. In Fig. 5 ist zudem beispielhaft dargestellt, wie die Vorspannung, d.h. Biegung, der ersten Bimetallstrukturen 127-1, 129-1 durch die Vorspannung, d.h. Biegung der zweiten Bimetallstrukturen 127-2, 129-2 derart kompensiert wird, dass die zweite Elektrodeneinrichtung 118 vorteilhaft parallel zu der ersten Elektrodeneinrichtung 114 (in Fig. 5 nicht dargestellt) ausgerichtet ist.

Fig. 6 zeigt eine schematische schräge Detailansicht auf eine Vorrichtung 410 zum Detektieren von Infrarotstrahlung 50 gemäß noch einer weiteren Ausführungsform der vorliegenden Erfindung. Die Vorrichtung 410 ist eine Variante der Vorrichtung 310 und unterscheidet sich von dieser in der Anordnung und Anzahl der Aufhängungselemente 326 sowie in der Ausgestaltung des Infrarotstrahlungs-Absorptionselements 417 und der zweiten Elektrodeneinrichtung 418 der Vorrichtung 410. Die Vorrichtung 410 umfasst nur ein einzelnes Aufhängungselement 326, welches wie das Aufhängungselement 326 der Vorrichtung 310 ausgebildet ist. Statt lateral zu dem Infrarotstrahlungs-Absorptionselements 417 ist das Aufhängungselement 326 bei der Vorrichtung 410 an einer von dem Substrat 12 abgewandten Außenseite 417' des Infrarotstrahlungs-Absorptionselements 417 angeordnet. Somit ist die Vorrichtung 410 in lateraler Richtung besonders platzsparend, daher kann eine Vielzahl der Vorrichtungen 410 besonders füllend in einer Fläche angeordnet werden.

Die zweite Bimetallstruktur 129-2 des Aufhängungselements 326 ist an einem Ende, welches nicht direkt mit dem Quersteg 327 verbunden ist, mit einem Schaft 432 verbunden. Der Schaft 432 ist durch einen Schacht 430, welcher durch das Infrarotstrahlungs-Absorptionselement 417 und die zweite Elektrodeneinrichtung 418 hindurch ausgebildet ist, bis zu dem Substrat 12 geführt und mit dem Substrat 12 verbunden. Die Absorptionseinrichtung 416 der Vorrichtung 410 ist somit lediglich über den Schaft 432 an dem Substrat 12 aufgehängt. Die Bewegbarkeit der Absorptionseinrichtung 416 gegenüber dem Substrat wird durch das Aufhängungselement 326 bereitgestellt, dessen temperaturabhängige Verformung, d.h. Verbiegung, die Resonanzfrequenz der periodischen Bewegung beeinflusst. Abgesehen von dem Schacht 430 können das Infrarotstrahlungs-Absorptionselement 417 und die zweite Elektrodeneinrichtung 418 gleich dem Infrarotstrahlungs-Absorptionselement 117 und der zweiten Elektrodeneinrichtung 118 der Vorrichtung 110 ausgebildet sein.

Eine oder mehrere Elektroden 114, 215, 217 der ersten Elektrodeneinrichtung 14; 114; 214 auf dem Substrat 12 können um einen Fußpunkt 434 des Schafts 432 auf dem Substrat 12 herum ausgebildet oder angeordnet sein.

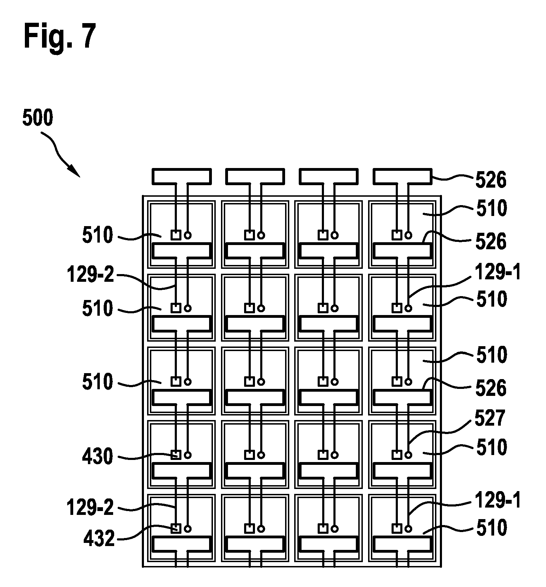

Fig. 7 zeigt eine schematische Draufsicht auf eine Anordnung 500 von erfindungsgemäßen Vorrichtungen 510 gemäß noch einer weiteren Ausführungsform der vorliegenden Erfindung. Die Vorrichtung 510 ist eine Variante der Vorrichtung 410, welche sich von dieser darin unterscheidet, dass jeweils ein Aufhängungselement 526 der Vorrichtungen 510 statt des einfachen Querstegs 327 des Aufhängungselements 326 jeweils ein Entkopplungselement 527 aufweist, welches zur besseren thermischen Entkopplung der ersten und der zweiten Bimetallstruktur 129-1, 129-2 eine Form einer nicht geschlossenen Rechteckkontur aufweist.

Die Anordnung 500 umfasst beispielhaft ein matrixartiges Array von vier mal fünf Vorrichtungen 510. Alternativ kann die erfindungsgemäße Anordnung aber auch andere erfindungsgemäße Vorrichtungen, beispielsweise Vorrichtungen 10; 110; 210; 310; 410, auch miteinander gemischt, aufweisen, und/oder andere Anzahlen von erfindungsgemäßen Vorrichtungen pro Spalte und/oder Zeile aufweisen, welche auch nicht matrixartig angeordnet sein können. Die Auswerteeinrichtung 24 kann jeweils für jede einzelne Vorrichtung der erfindungsgemäßen Anordnung separat bereitgestellt sein; es kann aber auch eine Auswerteeinrichtung 24 für eine Untermenge oder für alle Vorrichtungen der Anordnung vorgesehen sein.

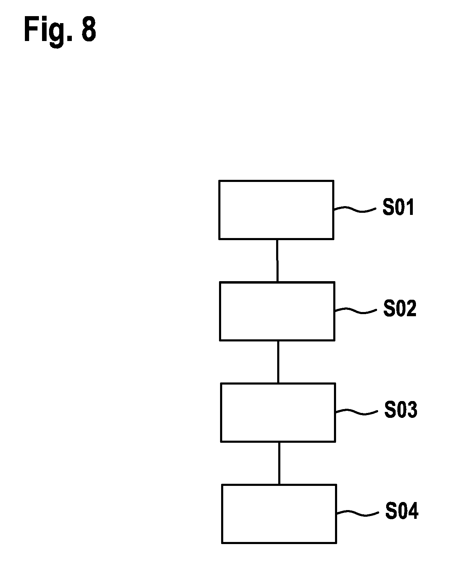

Fig. 8 zeigt ein schematisches Flussdiagramm eines Verfahrens zum Detektieren von Infrarotstrahlung 50 gemäß einer weiteren Ausführungsform der vorliegenden Erfindung. Das Verfahren gemäß Fig. 8 ist durch die erfindungsgemäße Vorrichtung, insbesondere eine der erfindungsgemäßen Vorrichtungen 10; 110; 210; 310; 410; 510 durchführbar und ist im Hinblick auf alle in Bezug auf diese Ausführungsformen beschriebenen Varianten und Weiterbildungen anpassbar und umgekehrt.

In einem Schritt S01 wird die zu detektierende Infrarotstrahlung 50 auf eine Absorptionseinrichtung 16; 116; 216 geleitet, welche über mindestens ein Aufhängungselement (4; 124, 126; 224, 226; 324, 326 an einem Substrat 12 elastisch aufgehängt ist. Das mindestens eine Aufhängungselement 4; 124, 126; 224, 226; 324, 326 ist dazu ausgebildet, sich in Abhängigkeit von einer durch die absorbierte Infrarotstrahlung 50 verursachten Wärme zumindest teilweise zu verformen, wodurch sich beispielsweise eine Federhärte oder ein Elastizitätsmodul des mindestens einen Aufhängungselements 4; 124, 126; 224, 226; 324, 326 verändern kann.

In einem Schritt S02 wird eine elektrische Potentialdifferenz zwischen einer ersten Elektrodeneinrichtung 14; 114; 214, welche auf oder an dem Substrat 12 angeordnet, und einer zweiten Elektrodeneinrichtung 18; 118; 418, welche auf oder an der Absorptionseinrichtung 16; 116; 216; 416 angeordnet ist, derart erzeugt, dass die Absorptionseinrichtung 16; 116; 216; 416 in eine resonante periodische Bewegung versetzt wird. Die periodische Bewegung kann insbesondere eine sinusförmige Bewegung sein. Dazu kann eine sinusförmige Spannung an die erste und/oder die zweite Elektrodeneinrichtung 14; 114, 214; 18; 418 angelegt werden. Die angelegte Spannung, insbesondere sinusförmige Spannung, kann vorteilhafterweise in ihrer Frequenz verändert werden, das heißt es kann ein Frequenzbereich durchstrichen werden.

In einem Schritt S03 wird eine aktuelle Resonanzfrequenz, welche die Absorptionseinrichtung 16; 116; 216; 416 infolge der Verformung des mindestens einen Aufhängungselements 4; 124, 126; 224, 226; 324, 326 aufgrund der absorbierten Infrarotstrahlung 50 aufweist, erfasst. Bei einer Bewegung mit der Resonanzfrequenz weist die periodische Bewegung eine maximale Schwingungsamplitude sowie eine maximale Kapazitätsänderung zwischen dem Maxima und Minima der periodischen Bewegung auf, welche besonders leicht ermittelbar sein kann. Bevorzugt wird die Resonanzfrequenz der Absorptionseinrichtung 16; 116; 216; 416 kapazitiv ermittelt, d.h., indem zuerst eine zeitabhängige periodische Kapazitätsänderung zwischen der ersten und der zweiten Elektrodeneinrichtung 14; 114; 214, 18; 118; 418 erfasst wird und daraus die Resonanzfrequenz bestimmt wird.

In einem Schritt S04 wird die Infrarotstrahlung 50 basierend auf der erfassten Resonanzfrequenz der Absorptionseinrichtung 16; 116; 216; 416 detektiert. Dazu kann die erfasste, aktuelle Resonanzfrequenz der Absorptionseinrichtung 16; 116; 216; 416 mittels einer vorbestimmten Wertetabelle oder eines Rechenmodells in eine absorbierte Strahlenmenge und/oder eine Temperatur umgerechnet werden, beispielsweise mittels der Auswerteeinrichtung 24 einer der erfindungsgemäßen Vorrichtungen 10; 110; 210; 310; 410; 510.

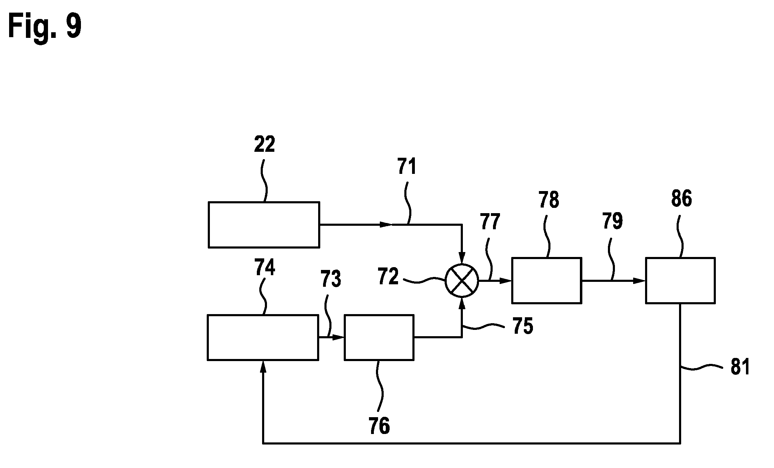

Fig. 9 zeigt ein schematisches Blockschaltbild zum Erläutern eines möglichen Auswerteprinzips in dem Verfahren gemäß Fig. 8. Dabei wird ein Messsignal 71 der Erfassungseinrichtung 22, beispielsweise ein Messsignal 71, welches eine zeitabhängige Kapazitätsänderung zwischen der ersten und der zweiten Elektrodeneinrichtung 14; 114, 214; 18; 418 indiziert, an einen Multiplizierer 72 weitergeleitet. Ein Signalgenerator 74 erzeugt ein periodisches, insbesondere sinusförmiges Signal 73, welches mittels eines Phasenschiebers 76 zum Ausbilden eines Referenzsignals 75 phasenverschoben wird. Das Referenzsignal 75 wird ebenfalls an den Multiplizierer 72 weitergeleitet und von diesem mit dem Messsignal 71 multipliziert, so dass ein multipliziertes Signal 77 entsteht, welches an einen Integrator 78, beispielsweise einen Tiefpass, weitergeleitet wird. Der Integrator 78 erzeugt aus dem multiplizierten Signal 77 ein integriertes Signal 79, welches ein Gleichstromsignal ist.

Das integrierte Signal 79 wird an eine Vergleichseinheit 80 weitergeleitet, welche prüft, ob eine Spannungsamplitude des integrierten Signals 79 gleich Null ist. Der Signalgenerator 74, der Multiplizierer 72, der Phasenschieber 76, der Integrator 78 und/oder die Vergleichseinheit 80 können Teil der Auswerteeinheit 24 einer der erfindungsgemäßen Vorrichtungen 10; 110; 210; 310; 410; 510 sein.

Über eine Rückkopplung, beispielsweise nach dem Closed-Loop-Verfahren, wird in einem Kopplungssignal 81 durch die Vergleichseinheit 80 dem Signalgenerator 74 eine Information übermittelt, ob das integrierte Signal 79 die Spannungsamplitude von Null aufweist oder nicht. Ist dies nicht der Fall, wird mittels des Signalgenerators 74 die Frequenz des erzeugten Signals 73 verändert, solange, bis die Spannungsamplitude des multiplizierten Signals 79 Null beträgt. In diesem Fall ist die Frequenz des erzeugten periodischen Signals 73 gleich der Frequenz des Messsignals 71, welche dadurch ermittelbar ist. Mit einem solchen Verfahren mit Lock-in-Verstärker ist somit besonders präzise die Frequenz des durch die Erfassungseinrichtung 22 erzeugten Messsignals 71, mithin die Resonanzfrequenz der Absorptionseinrichtung 16; 116; 216; 416, besonders präzise erfassbar. Mit dem Lock-in-Verfahren wird mit anderen Worten eine Kreuzkorrelation zwischen dem Messsignal 71 und dem Referenzsignal 75 bestimmt.

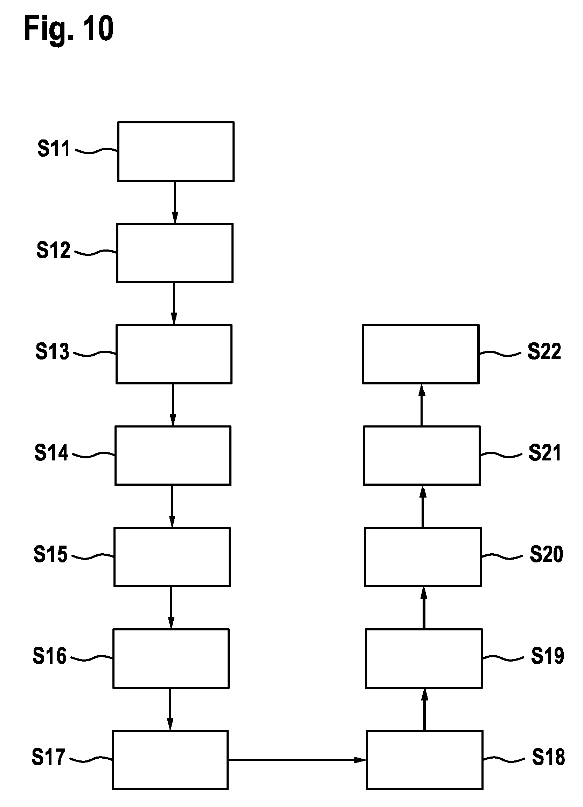

Fig. 10 zeigt ein schematisches Blockdiagramm zum Erläutern eines erfindungsgemäßen Verfahrens zum Herstellen einer Vorrichtung zum Detektieren von Infrarotstrahlung 50, insbesondere einer der Vorrichtungen 10; 110; 210, 310; 410; 510, wie vorstehend beschrieben. Die beschriebenen Verfahrensschritte werden vorteilhaft in der Reihenfolge ihrer Nummerierung durchgeführt.

In einem Schritt S11 wird ein Substrat 12 mit einer auf oder an dem Substrat 12 angeordneten ersten Elektrodeneinrichtung 14; 114; 214 bereitgestellt. Das Substrat 12 kann insbesondere eine anwendungsspezifische integrierte Schaltung (ASIC) aufweisen oder daraus bestehen. Bei dem erfindungsgemäßen Verfahren zur Herstellung können somit bereits vorgefertigte Bauteile vorteilhaft verwendet werden, wodurch sich der technische Aufwand des Herstellungsverfahrens verringert.

In einem Schritt S12 wird eine Opferschicht auf, insbesondere an, der ersten Elektrodeneinrichtung 14; 114; 214 abgeschieden, um einen Abstand d zwischen den späteren ersten und zweiten Elektrodeneinrichtungen 14, 18; 114, 118; 214, 118 auszubilden. Die Opferschicht hat vorteilhaft eine Dicke von zwischen 50 und 150 Nanometern, insbesondere zwischen 90 und 110 Nanometern, besonders bevorzugt zwischen 95 und 105 Nanometern.

In einem Schritt S13 wird eine erste metallische Schicht auf der Opferschicht abgeschieden und strukturiert, um die zweite Elektrodeneinrichtung 18; 118 auszubilden. In einem Schritt S14 wird eine erste nicht-leitende Schicht auf der ersten metallischen Schicht abgeschieden, welche das erste von mindestens zwei Materialien der ersten und zweiten Bimetallstrukturen 127-1, 129-1, 127-2, 129-2, nämlich das Material der Stege 124-i, 126-i der Aufhängungselemente 124, 126; 224, 226 definiert. Die erste nicht-leitende Schicht besteht bevorzugt aus Siliziumoxid, SiO₂. Optional beinhaltet die erste nicht-leitende Schicht eine elektrische Zuleitung für die zweite Elektrodeneinrichtung 118, wie in Bezug auf Fig. 4 beschrieben. Dies wird durch eine zusätzliche Metallschicht mit entsprechender Strukturierung sowie einer weiteren nicht-leitenden Schicht zur Abgrenzung nach oben, das heißt von dem Substrat 12 abgewandt, realisiert. Die erste nicht-leitende Schicht weist bevorzugt Schichtdicken im Bereich von 200 bis 500 Nanometer, bevorzugt zwischen 300 und 400 Nanometer auf.

In einem Schritt S15 wird eine zweite metallische Schicht auf der ersten nichtleitenden Schicht, insbesondere im Bereich der Aufhängungselemente 124, 126; 224, 226 abgeschieden und strukturiert, so dass die Stege 124-i, 126-i bedeckt sind. Von der zweiten metallischen Schicht werden später die ersten und zweiten Metallabschnitte 131-1, 133-1, 131-2, 133-2 beibehalten, wobei der Rest der zweiten metallischen Schicht entfernt werden wird. Im Bereich der als thermische Entkopplungselemente dienenden Stege 124-2, 124-3, 126-2, 126-3 zwischen den ersten Bimetallstrukturen 131-1, 133-1 und den zweiten Bimetallstrukturen 131-2, 133-2 fungiert die zweite metallische Schicht vorteilhafterweise als Ätzstopp und wird erst nach einem Ätzschritt entfernt. Im Bereich zwischen den späteren Aufhängungselemente 124, 126; 224, 226 wird vorteilhafterweise die zweite metallische Schicht nicht abgeschieden oder sofort entfernt. In diesem Bereich dient die erste nicht-leitende Schicht als erster Teil des zu bildenden Infrarotstrahlungs-Absorptionselements 117.

In einem Schritt S16 wird eine zweite nicht-leitende Schicht auf der ersten nichtleitenden Schicht, insbesondere in dem Bereich zwischen den späteren Aufhängungselementen 124, 126, 224, 226 abgeschieden. In diesem Bereich bildet die erste nicht-leitende Schicht zusammen mit der zweiten nicht-leitenden Schicht das spätere Infrarotstrahlungs-Absorptionselement 117. Die erste und die zweite nicht-leitende Schicht werden vorteilhaft mit solchen jeweiligen Dicken abgeschieden, dass eine Gesamtdicke des Infrarotstrahlungs-Absorptionselements zwischen 1,5 Mikrometern und 1,7 Mikrometern, insbesondere 1,6 Mikrometer beträgt.

In einem Schritt S17 wird im Bereich des Infrarotstrahlungs-Absorptionselements 117 eine weitere Metallschicht abgeschieden und strukturiert, wodurch ein metallischer Ätzstopp für das Infrarotstrahlungs-Absorptionselement 117 ausgebildet wird.

In einem Schritt S18 werden die erste und die zweite nicht-leitenden Schichten bis zu einem jeweiligen Ätzstopp auf Metall rückgeätzt. Dabei können metallische Strukturen, z.B. Antennenstrukturen, welche an eine Wellenlänge der zu detektierenden Infrarotstrahlung 50 angepasst sind, auf der Oberfläche 117' des Infrarotstrahlungs-Absorptionselements 117 ausgebildet werden.

In einem Schritt S19 werden die zweite und die dritte metallische Schicht auf dem Infrarotstrahlungs-Absorptionselement 117 sowie im Bereich der thermischen Entkopplungselemente, das heißt der Stege 124-2, 124-3, 126-2, 126-3 zwischen der jeweiligen ersten Bimetallstruktur 131-1,133-1 und der jeweiligen zweiten Bimetallstruktur 131-2, 133-2 entfernt.

In einem Schritt S20 werden zwischen allen Stegen 124-i, 126-i bis auf die Opferschicht hinunter Trenches ausgebildet, um die meanderförmige, schlangenförmige oder zickzackförmige Struktur der Stege 124-i, 126-i, welche auch als "Ärmchenstruktur" bezeichenbar ist, auszubilden. In einem Schritt S21 wird die Opferschicht, beispielsweise durch ein geeignetes Ätzgas, entfernt. In einem Schritt S22 werden eine Steuereinrichtung 20, eine Erfassungseinrichtung 22 und eine Auswerteeinrichtung 24 bereitgestellt und mittels elektrischer Leitungen an die entsprechenden Elektrodeneinrichtungen angeschlossen.

Obwohl die vorliegende Erfindung anhand bevorzugter Ausführungsbeispiele vorstehend beschrieben wurde, ist sie darauf nicht beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

Beispielsweise können einige oder alle der Elektroden 114, 215, 217, 18, 118, 418 statt als durchgehende Rechtecke oder Quadrate auch als Kammstrukturen ausgeführt werden.

## Patentansprüche

1. Vorrichtung (10; 110; 210; 310; 410; 510) zum Detektieren von Infrarotstrahlung (50) mit:
einem Substrat (12);
einer ersten Elektrodeneinrichtung (14; 114; 214), welche auf oder an dem Substrat (12) angeordnet ist;
einer Absorptionseinrichtung (16; 116; 216; 416), welche dazu ausgelegt ist, die zu detektierende Infrarotstrahlung (50) zumindest teilweise zu absorbieren;
wobei die Absorptionseinrichtung (16; 116; 216; 416) über mindestens ein Aufhängungselement (4; 124, 126; 224, 226; 324, 326) der Vorrichtung (10; 110; 210; 310; 410; 510) elastisch an dem Substrat (12) aufgehängt ist;
wobei das mindestens eine Aufhängungselement (4; 124, 126; 224, 226; 324, 326) dazu ausgebildet ist, sich in Abhängigkeit von einer durch die absorbierte Infrarotstrahlung (50) verursachten Wärme zumindest teilweise zu verformen; einer zweiten Elektrodeneinrichtung (18; 118; 418), welche auf oder an der Absorptionseinrichtung (16; 116; 216; 416) angeordnet ist;
einer Steuereinrichtung (20), welche dazu ausgelegt ist, eine elektrische Potentialdifferenz zwischen der ersten Elektrodeneinrichtung (14; 114; 214) und der zweiten Elektrodeneinrichtung (18; 118; 418) derart zu erzeugen, dass die Absorptionseinrichtung (16; 116; 216; 416) in eine resonante periodische Bewegung versetzt wird; wobei eine Resonanzfrequenz der resonanten periodischen Bewegung von der Verformung des Aufhängungselements (4; 124, 126; 224, 226; 324, 326) abhängt;
einer Erfassungseinrichtung (22), welche dazu ausgelegt ist, die Resonanzfrequenz der Absorptionseinrichtung (16; 116; 216; 416) zu erfassen; und
einer Auswerteeinrichtung (24), welche dazu ausgelegt ist, die zu detektierende Infrarotstrahlung (50) basierend auf der erfassten Resonanzfrequenz der Absorptionseinrichtung (16; 116; 216; 416) zu detektieren.

2. Vorrichtung (110; 210; 310; 410; 510) nach Anspruch 1,
wobei das mindestens eine Aufhängungselement (4; 124, 126; 224, 226; 324, 326) mindestens eine erste Bimetallstruktur (127-1129-1) aufweist, welche dazu ausgebildet ist, sich in Folge einer Erwärmung der Absorptionseinrichtung (116; 216; 416) aufgrund der absorbierten Infrarotstrahlung (50) zu verformen.

3. Vorrichtung (110; 210; 310; 410; 510) nach Anspruch 1 oder 2,
wobei das mindestens eine Aufhängungselement (4; 124, 126; 224, 226; 324, 326) eine zweite Bimetallstruktur (127-1, 127-2) aufweist;
wobei die zweite Bimetallstruktur (127-1, 127-2) von der ersten Bimetallstruktur (127-1, 129-1) thermisch entkoppelt ist und wobei die zweite Bimetallstruktur (127-1, 127-2) mit einer gleichen Länge und aus denselben Materialien ausgebildet ist wie die erste Bimetallstruktur (127-1, 129-1).

4. Vorrichtung (10; 110; 210; 310; 410; 510) nach einem der Ansprüche 1 bis 3,
wobei die erste Elektrodeneinrichtung (14, 114; 214) und die zweite Elektrodeneinrichtung (18; 118; 418) in einem Abstand (d) voneinander angeordnet sind, welcher zwischen einem Achtel und drei Achteln einer Wellenlänge der zu detektierenden Infrarotstrahlung (50) liegt.

5. Vorrichtung (210) nach einem der Ansprüche 1 bis 4,
wobei die erste Elektrodeneinrichtung (214) mindestens eine Antriebselektrode (215-1, 215-2) und mindestens eine Detektionselektrode (217) aufweist, welche voneinander beabstandet sind;
wobei die Steuereinrichtung (20) dazu ausgelegt ist, eine elektrische Potentialdifferenz zwischen der mindestens einen Antriebselektrode (215-1, 215-2) der ersten Elektrodeneinrichtung (14) und der zweiten Elektrodeneinrichtung (118) zu erzeugen; und
wobei die Erfassungseinrichtung (22) zum Erfassen der Resonanzfrequenz der Absorptionseinrichtung (16; 116; 216) elektrisch mit der mindestens einen Detektionselektrode (217) gekoppelt ist.

6. Anordnung (500) zum Detektieren von Infrarotstrahlung (50) mit einer n-spaltigen, m-reihigen Matrix aus Vorrichtungen (510) nach einem der Ansprüche 1 bis 6.

7. Verfahren zum Detektieren von Infrarotstrahlung (50), mit den Schritten:
Leiten (S01) der zu detektierenden Infrarotstrahlung (50) auf eine Absorptionseinrichtung (16; 116; 216; 416), welche über mindestens ein Aufhängungselement (4; 124, 126; 224, 226; 324, 326) an einem Substrat (12) elastisch aufgehängt ist; wobei das mindestens eine Aufhängungselement (4; 124, 126; 224, 226; 324, 326) dazu ausgebildet ist, sich in Abhängigkeit von der durch die absorbierte Infrarotstrahlung (50) verursachten Wärme zumindest teilweise zu verformen;
Erzeugen (S02) einer elektrischen Potentialdifferenz zwischen einer ersten Elektrodeneinrichtung (14; 114; 214), welche auf oder an dem Substrat (12) angeordnet ist, und einer zweiten Elektrodeneinrichtung (18; 118; 418), welche auf oder an der Absorptionseinrichtung (16; 116; 216; 416) angeordnet ist, derart, dass die Absorptionseinrichtung (16; 116; 216; 416) in eine resonante periodische Bewegung versetzt wird; wobei eine Resonanzfrequenz der resonanten periodischen Bewegung von der Verformung des mindestens einen Aufhängungselements (4; 124, 126; 224, 226; 324, 326) abhängt;
Erfassen (S03) der Resonanzfrequenz der Absorptionseinrichtung (16; 116; 216; 416); und
Detektieren (S04) der Infrarotstrahlung (50) basierend auf der erfassten Resonanzfrequenz der Absorptionseinrichtung (16; 116; 216; 416).

8. Verfahren nach Anspruch 7,
wobei zum Erfassen (S03) der Resonanzfrequenz der Absorptionseinrichtung (16; 116, 216; 416) eine elektrische Kapazität zwischen zumindest einem Teil der ersten Elektrodeneinrichtung (14; 114; 214) und zumindest einem Teil der zweiten Elektrodeneinrichtung (18; 118; 418) erfasst wird.

9. Verfahren nach Anspruch 7 oder 8,
wobei das Erfassen (S03) der Resonanzfrequenz unter Verwendung eines Lock-In-Verstärkers erfolgt.

10. Verfahren zum Herstellen einer Vorrichtung (10; 110; 210) zum Detektieren von Infrarotstrahlung (50), mit den Schritten:
Bereitstellen (S11) eines Substrats (12) mit einer auf oder an dem Substrat (12) angeordneten ersten Elektrodeneinrichtung (14; 114; 214);
Abscheiden (S12) einer Opferschicht auf der ersten Elektrodeneinrichtung (14; 114; 214);
Abscheiden und Strukturieren (S13) einer ersten metallischen Schicht auf der Opferschicht;
Abscheiden (S14) einer ersten nichtleitenden Schicht auf der ersten metallischen Schicht;
Abscheiden und Strukturieren (S15) einer zweiten metallischen Schicht auf der ersten nichtleitenden Schicht;
Abscheiden (S16) einer zweiten nichtleitenden Schicht auf der ersten nichtleitenden Schicht;
Abscheiden (S17) und Strukturieren einer dritten metallischen Schicht auf einem Bereich der zweiten nichtleitenden Schicht;
Rückätzen (S18) der ersten und der zweiten nichtleitenden Schicht bis Ätzstopp auf Metall;
Teilweises Entfernen (S19) der zweiten und der dritten metallischen Schicht; Ausbilden (S20) von Trenches bis auf die Opferschicht;
Entfernen (S21) der Opferschicht; und
Bereitstellen und Anschließen (S22) einer Steuereinrichtung (20), einer Erfassungseinrichtung (22) und einer Auswerteeinrichtung (24).
